# EUROPÄISCHE PATENTANMELDUNG

(11) **EP 4 296 148 A1**
(43) Veröffentlichungstag der Anmeldung: **27.12.2023**
(21) Anmeldenummer: 22180966.8
(22) Anmeldetag: 24.06.2022
(51) Int. Cl.: B62D 25/20, B62D 33/04

(54) **KOFFERAUFBAU MIT RÜCKWANDRAHMEN UND NUTZFAHRZEUGEN MIT KOFFERAUFBAU**

(71) Anmelder: Schmitz Cargobull AG, 48341 Altenberge (DE)
(72) Erfinder: BEELMANN, Reinhard, 45721 Haltern am See (DE)
(74) Vertreter: Cohausz & Florack

(57) **Zusammenfassung**

Beschrieben und dargestellt ist ein Kofferaufbau (1) eines Nutzfahrzeugs (N) mit Seitenwänden (6), einem Dach (4) und einer Bodenstruktur (23), wobei Seitenwandpaneele (7) und ein Dachpaneel (5) eine strukturgebende innere Decklage (36), eine äußere Decklage (37) und eine zwischen der inneren Decklage (36) und der äußeren Decklage (37) angeordnete Kernlage (38) aus einem Kunststoff aufweisen, wobei die Bodenstruktur (23) ein Bodenpaneel (39) umfassend eine einen Ladeboden (48) bereitstellende Oberbodenlage (40), eine Unterbodenlage (41) zum Aufsetzen auf ein Chassis (66) oder Fahrwerk (69) des Nutzfahrzeugs (N) und eine zwischen der Oberbodenlage (40) und der Unterbodenlage (41) vorgesehene Bodenlage (42) aufweist, wobei die Bodenlage (42) eine Mehrzahl von Bodenquerträgern (43) und einen zwischen den Bodenquerträgern (43) vorgesehenen Kunststoff umfasst, wobei die Bodenstruktur (23), die Seitenwände (6) und das Dach (4) jeweils separate und untereinander zur Bildung eines Rückwandrahmens (10) gefügte Holmstrukturen (19-22) aufweisen und wobei sich die Holmstrukturen (20,21) der Seitenwände (6) wenigstens im Wesentlichen über die gesamte Höhe der Seitenwandpaneele (7) und die Holmstruktur (19) des Dachs (4) wenigstens im Wesentlichen über die gesamte Breite des Dachpaneels (5) erstrecken. Um die Fertigungskosten zu verringern, ist vorgesehen, dass die Holmstruktur (22) der Bodenstruktur (23) als ein mit der Bodenstruktur (23) verschraubter, sich wenigstens im Wesentlichen über die gesamte Breite der Bodenstruktur (23) erstreckender und wenigstens ein Rammpufferelement (25-27) tragender Kopfrahmen (24) ausgebildet ist.

## Beschreibung

Die Erfindung betrifft einen Kofferaufbau eines Nutzfahrzeugs, insbesondere Lastkraftwagen, Anhänger oder Sattelauflieger, mit festen, jeweils ein Seitenwandpaneel umfassenden Seitenwänden, einem festen ein Dachpaneel umfassenden Dach und einer festen Bodenstruktur, wobei die Seitenwandpaneele und das Dachpaneel eine strukturgebende, einem Laderaum des Kühlkofferaufbaus zugeordnete innere Decklage, eine strukturgebende, der Umgebung des Kühlkofferaufbaus zugeordnete äußere Decklage und eine zwischen der inneren Decklage und der äußeren Decklage angeordnete Kernlage aus einem Kunststoff aufweisen, wobei die Bodenstruktur ein Bodenpaneel umfassend eine einen Ladeboden bereitstellende Oberbodenlage, eine Unterbodenlage zum Aufsetzen auf ein Chassis oder Fahrwerk des Nutzfahrzeugs und eine zwischen der Oberbodenlage und der Unterbodenlage vorgesehene Bodenlage aufweist, wobei die Bodenlage eine Mehrzahl von Bodenquerträgern und einen zwischen den Bodenquerträgern vorgesehenen Kunststoff umfasst, wobei die Bodenstruktur, die Seitenwände und das Dach jeweils separate und untereinander zur Bildung eines Rückwandrahmens gefügte Holmstrukturen aufweisen und wobei sich die Holmstrukturen der Seitenwände wenigstens im Wesentlichen über die gesamte Höhe der Seitenwandpaneele und die Holmstruktur des Dachs wenigstens im Wesentlichen über die gesamte Breite des Dachpaneels erstrecken. Zudem betrifft die Erfindung ein Nutzfahrzeug, insbesondere Lastkraftwagen, Anhänger oder Sattelauflieger, mit einem Chassis, einem am Chassis montierten Fahrwerk und einem vom Chassis getragenen, am Chassis montierten Kofferaufbau.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig ein Rückwandrahmen vorgesehen, an dem zwei Türen in Form von Rückwandtüren oder ein Rolltor gehalten sein können, um den Rückwandrahmen wahlweise zu verschließen oder zum Be- und Entladen durch den Rückwandrahmen freizugeben. Gegenüber von dem Rückwandrahmen ist eine Stirnwand vorgesehen. Bei Kofferaufbauten, insbesondere in Form von Kühlkofferaufbauten, sind die Seitenwände, das Dach, die Stirnwand und die Rückwandtüren regelmäßig aus Seitenwandpaneelen, einem Dachpaneel, einem Stirnwandpaneel und Türpaneelen gebildet. Jedes dieser Paneele weist dabei bedarfsweise zwei strukturgebende Decklagen auf, zwischen denen eine Kernlage aus einem geschäumten Kunststoff vorgesehen ist. Die entsprechenden Decklagen sind entweder der Umgebung des Kofferaufbaus oder dem Laderaum zugeordnet. Die Decklagen weisen also vereinfacht gesprochen nach innen oder nach außen. Jede Decklage kann dabei bedarfsweise mehrlagig ausgebildet sein und dient der Aussteifung der Paneele. Eine Decklage weist daher wenigstens eine Schicht aus einem Metall und/oder einem faserverstärkten Kunststoff auf.

Die Bodenstruktur von Kofferaufbauten, insbesondere von Kühlkofferaufbauten, ist in Form eines Bodenpaneels ausgebildet, wobei eine Oberbodenlage vorgesehen ist, die den Ladeboden zum Abstellen der Ladung bereitstellt. Gegenüberliegend ist eine Unterbodenlage vorgesehen, die die Bodenstruktur nach unten abschließt und mit der der Kofferaufbau auf einem Chassis oder Fahrwerk des Nutzfahrzeugs aufgesetzt werden kann. Zwischen der Oberbodenlage und der Unterbodenlage ist eine Bodenlage vorgesehen, die zur Aussteifung der Bodenstruktur und zu Isolationszwecken eine Mehrzahl von Bodenquerträgern und dazwischen einen Kunststoff aufweist. Bei den Bodenquerträgern handelt es sich wegen der geringen Wärmeleitfähigkeit vorzugsweise um solche aus Holz. Der Kunststoff ist aus demselben Grunde meist als geschäumter Kunststoff ausgebildet.

Der Rückwandrahmen setzt sich zusammen aus vier verschiedenen Holmstrukturen, wobei zwei dieser Holmstrukturen von den Seitenwänden bereitgestellt werden. Die Holmstrukturen sind Teil der Seitenwände und erstrecken sich wenigstens im Wesentlichen über die gesamte Höhe der Seitenwandpaneele. Eine weitere Holmstruktur, die ebenfalls Teil des Dachs ist und sich wenigstens im Wesentlichen über die gesamte Breite des Dachpaneels erstreckt, wird von dem Dach bereitgestellt. Parallel zum Dach ist eine Holmstruktur der Bodenstruktur vorgesehen, die beim Fügen der Seitenwände mit der Bodenstruktur und mit dem Dach mit den anderen Holmstrukturen zum Rückwandrahmen zusammengesetzt wird.

Dem Rückwandrahmen gegenüber wird der Kofferaufbau von einer Stirnwand abgeschlossen, an der im Falle eines Kühlkofferaufbaus eine Transportkältemaschine vorgesehen ist, die Luft aus dem Laderaum ansaugt, herunterkühlt und zurück in den Laderaum bläst. Durch die Kernlagen aus geschäumtem Kunststoff und die ebenfalls geschäumten Kunststoff umfassende Bodenlage wird von außen nur sehr wenig Wärme in den Laderaum geleitet.

Der Kofferaufbau aus Stirnwand, Seitenwänden, Dach und Bodenstruktur stellt einen selbsttragenden Koffer dar, der als solches auf ein Chassis oder ein Fahrwerk eines Nutzfahrzeugs gehoben und dort montiert werden kann. Typischerweise umfassen entsprechende Nutzfahrzeuge ein Chassis aus Längsträgern und Querträgern, auf das der Kofferaufbau gesetzt und mit dem der Kofferaufbau verschraubt wird. An dem Chassis wiederum wird ein Fahrwerk montiert, das mehrere Achsen und diesen zugehörende Bremsen und Federungseinrichtungen umfassen kann.

Das Chassis erstreckt sich dabei bis an das hintere Ende des Kofferaufbaus, wo ein unterhalb des Rückwandrahmens vorgesehener Kopfrahmen angeordnet und mit dem Chassis verbunden ist. Die Längsträger des Chassis zwischen dem Fahrwerk und dem Kopfrahmen können dabei mehrteilig ausgebildet sein, weil das Chassis im Bereich des Fahrwerks eine höhere Festigkeit und Steifigkeit bereitstellen muss als am hinteren Ende des Kofferaufbaus. Dort werden weniger Kräfte von dem Fahrwerk, sondern beispielsweise von beim Be- und Entladen des Kofferaufbaus in den Kofferaufbau einfahrenden Staplerfahrzeugen aufgenommen. Der Kopfrahmen ist zudem mit Rammpufferelementen versehen, die die Kräfte beim Anfahren von Hindernissen, wie etwa Laderampen, beim Rückwärtsfahren des Nutzfahrzeugs dämpfen sollen. Die Rammpufferelemente sind daher oft aus Gummi oder als Rollrammpuffer gebildet, bei denen wenigstens eine Rolle zur Anlage an dem Hindernis vorgesehen ist, die über ein Federelement mit dem Kopfrahmen verbunden ist, um die beim Anfahren des Hindernisses auf die Rolle einwirkenden Kräfte zu dämpfen. Beim Anfahren eines Hindernisses in einer Richtung nach hinten werden die entsprechenden Kräfte durch die Rammpufferelemente nicht vollständig gedämpft. Die verbleibenden Kräfte werden zur Schonung des Kofferaufbaus an das Chassis des Nutzfahrzeugs abgeleitet.

Aufgrund der vorgenannten, vielschichtigen Anforderungen an Kofferaufbauten aufweisende Nutzfahrzeuge ergeben sich recht hohe Fertigungskosten solcher Nutzfahrzeuge.

Daher lieg der vorliegenden Erfindung die Aufgabe zugrunde, die Kofferaufbauten und Nutzfahrzeuge der eingangs genannten und zuvor näher erläuterten Art derart weiterzubilden und auszugestalten, dass die Fertigungskosten verringert werden können.

Diese Aufgabe ist bei einem Kofferaufbau nach dem Oberbegriff von Anspruch 1 dadurch gelöst, dass die Holmstruktur der Bodenstruktur als ein mit der Bodenstruktur verschraubter, sich wenigstens im Wesentlichen über die gesamte Breite der Bodenstruktur erstreckender und wenigstens ein Rammpufferelement tragender Kopfrahmen ausgebildet ist.

Die genannte Aufgabe ist bei einem Nutzfahrzeug nach dem Oberbegriff von Anspruch 12 dadurch gelöst, dass der Kofferaufbau nach einem der Ansprüche 1 bis 11 ausgebildet ist.

Der Kopfrahmen wird erfindungsgemäß in die untere, durch die Bodenstruktur bereitgestellte Holmstruktur und damit in den Kofferaufbau integriert. Da bereits der Kofferaufbau als solcher den Kopfrahmen aufweist, kann auf einen zusätzlichen Kopfrahmen unterhalb des Kofferaufbaus am Ende des Chassis, auf das der Kofferaufbau aufgesetzt und montiert wird, verzichtet werden. Dabei erfordert es die Integration des Kopfrahmens in den Rückwandrahmen grundsätzlich nicht, dass der Kopfrahmen einstückig ausgebildet ist. Der Kopfrahmen kann wie auch bei den übrigen Holmstrukturen an den Seitenwänden und dem Dach durchaus aus mehreren Bauteilen, insbesondere mehreren Profilen, ausgebildet sein.

Dabei ist die Montage des Kopfrahmens an der Bodenstruktur einfach zu bewerkstelligen, da der Kopfrahmen mit der übrigen Bodenstruktur verschraubt wird. Zusätzlicher Montageaufwand entsteht typischerweise nicht, da sich der Kopfrahmen wenigstens im Wesentlichen über die gesamte Breite der Bodenstruktur erstreckt. Ein zusätzlicher hinterer Abschluss der Bodenstruktur kann mithin entfallen. Auf diese Weise kann Material eingespart werden, was die Fertigungskosten des Kofferaufbaus senkt. Dies gilt in besonderem Maße, da insbesondere teure Materialien wie beispielsweise Stahl eingespart werden können. Erfindungsgemäß kann dennoch eine hohe Robustheit mit dem entsprechend vorgesehenen Kopfrahmen erreicht werden. Zusätzliche Bauteile, die für eine ausreichende Robustheit und Steifigkeit sorgen würden, sind nicht erforderlich. Insbesondere kann auf einen zusätzlichen Kopfrahmen und/oder auf eine zusätzliche bodenseitige Holmstruktur verzichtet werden.

Bei dem Kofferaufbau handelt es sich insbesondere um einen sogenannten Kühlkofferaufbau, bei dem an einer Stirnwand des Kofferaufbaus eine Transportkältemaschine vorgesehen ist, die Luft aus dem Laderaum des Kofferaufbaus ansaugt und abkühlt. Die abgekühlte Luft wird sodann von der Transportkältemaschine wieder in den Laderaum geblasen.

Bei einer ersten besonders bevorzugten Ausgestaltung des Kofferaufbaus ist das wenigstens eine Rammpufferelement ein Gummipuffer, ein Kunststoffpuffer und/oder ein Rollrammpuffer. Gummipuffer oder Puffer aus einem Kunststoff sind entsprechend elastisch. Wenn der Kofferaufbau mit dem Gummi oder dem Kunststoff des Puffers an ein Hindernis stößt, dann kann es zu einer Deformation des Kunststoffs oder Gummis kommen, wodurch die beim Anfahren des Hindernisses eingeleiteten Kräfte gedämpft werden. Alternativ oder zusätzlich können noch sogenannte Rollrammpuffer vorgesehen sein, bei denen wenigstens eine Rolle für den Kontakt mit dem Hindernis vorgesehen ist, welche federbelastet oder über ein Federmittel elastisch gelagert sein kann, so dass beim Anfahren eines Hindernisses die Rolle gegen die Federkraft des Federmittels ausgelenkt werden kann. Das Auslenken des Federmittels führt ebenfalls zum Dämpfen von Kräften beim Anfahren des Hindernisses. Die Rolle kann zudem im Falle eines Be- oder Entladens an einer Laderampe an der Laderampe abrollen, wenn sich der Kofferaufbau durch das Be- oder Entladen senkt oder hebt.

Zur weiteren Vereinfachung der Fertigung des Kofferaufbaus können die Holmstrukturen der Seitenwände mit der Holmstruktur des Dachs und/oder mit dem Kopfrahmen verschraubt sein. So lassen sich die Seitenwände einfach mit dem Dach und/oder dem Kopfrahmen fügen und zugleich der Rückwandrahmen aussteifen, wenn die Holmstrukturen zusätzlich miteinander verschraubt werden. Dadurch lässt sich insbesondere auf einfache Weise ein Verwinden des Kofferaufbaus reduzieren.

Eine besonders stabile Anbindung des Kopfrahmens an die übrige Bodenstruktur lässt sich erreichen, wenn der Kopfrahmen mit dem hintersten Bodenquerträger der Bodenstruktur verschraubt wird. So lassen sich zudem hohe Kräfte beim Anfahren eines Hindernisses mit dem Kopfrahmen von dem Kopfrahmen aufnehmen und an die restliche Bodenstruktur ableiten. Wenn der Kopfrahmen alternativ oder zusätzlich mit der Oberbodenlage und/oder mit der Unterbodenlage verschraubt ist, kann ein zweckmäßiger hinterer Abschluss der Bodenstruktur erreicht werden. Insbesondere kann vermieden werden, dass an den entsprechenden Stellen Feuchtigkeit in die Bodenstruktur eindringen kann. Zusätzlich kann die Anbindung des Kopfrahmens an den übrigen Teil der Bodenstruktur noch stabiler und steifer ausgebildet werden. Es lassen sich auf diese Weise beispielsweise Kräfte direkt in die Oberbodenlage und/oder die Unterbodenlage ableiten.

Eine einfache Fertigung des Kofferaufbaus kann mit einer besonders stabilen Anbindung des Kopfrahmens einhergehen, wenn der Kopfrahmen mit der übrigen Bodenstruktur verschraubt wird. Durch die Vielzahl der möglichen, über die Breite des Kopfrahmens verteilt angeordneten Schrauben können hohe Kräfte in die übrige Bodenstruktur eingeleitet werden. Dies ist insbesondere dann der Fall, wenn der Kopfrahmen mit dem hintersten Bodenquerträger der Bodenstruktur verschraubt ist. Die Bodenquerträger sind zur Aussteifung der Bodenstruktur vorgesehen und können mithin hohe Kräfte aufnehmen. Um dies noch zu unterstützen kann es sich anbieten, wenn die Schrauben vom Anschrauben des Kopfrahmens an den hintersten Bodenquerträger von oben, hinten und/oder von unten bezogen auf den Kofferaufbau in den hintersten Bodenquerträger eingeschraubt sind. Auch wenn der Kopfrahmen nicht mit dem hintersten Bodenquerträger, sondern mit einem anderen Bauteil der übrigen Bodenstruktur verschraubt ist, kann es sich aus den genannten Gründen anbieten, wenn die Schrauben zum Anschrauben des Kopfrahmens von oben, unten und/oder von hinten gefügt werden.

Der Integration des Kopfrahmens in den Rückwandrahmen und der damit einhergehenden Materialeinsparung ist es grundsätzlich dienlich, wenn der obere Rand des Kopfrahmens wenigstens im Wesentlichen auf der Höhe der Oberbodenlage angeordnet ist. So kann ein umfänglicher hinterer Abschluss der Bodenstruktur erzielt werden, ohne dass dafür neben dem Kopfrahmen noch eine zusätzliche untere Holmstruktur des Rückwandrahmens erforderlich wäre. Dies ist insbesondere dann der Fall, wenn der obere Rand des Kopfrahmens wenigstens im Wesentlichen fluchtend mit dem Ladeboden ausgerichtet ist.

Alternativ oder zusätzlich ist es der Integration des Kopfrahmens in den Rückwandrahmen und der damit einhergehenden Materialeinsparung dienlich, wenn der untere Rand des Kopfrahmens wenigstens im Wesentlichen unterhalb der Unterbodenlage angeordnet ist. So lässt sich ein umfänglicher hinterer Abschluss der Bodenstruktur erzielen, ohne dass dafür neben dem Kopfrahmen noch eine zusätzliche untere Holmstruktur des Rückwandrahmens erforderlich wäre.

Zur weiteren Aussteifung kann der Kopfrahmen mit Längsträgern des Kofferaufbaus verbunden sein, die unter der Bodenstruktur angeordnet und mit der Bodenstruktur verbunden sind. So lassen sich Kräfte von dem Kopfrahmen noch besser in die restliche Bodenstruktur ableiten. Auch ein Befahren des hinteren Abschnitts des Ladebodens kann so zuverlässiger toleriert werden. Im Falle von entsprechenden Längsträgern unter der Bodenstruktur des Kofferaufbaus kann sich der untere Rand des Kopfrahmens zweckmäßig bis auf Höhe des unteren Endes von unter der Unterbodenlage angeordneten und mit der Unterbodenlage verbundenen Längsträgern angeordnet sein. Es kann aber für einen besseren Anfahrschutz und Unterfahrschutz bedarfsweise aber noch weiter bevorzugt sein, wenn der untere Rand des Kopfrahmens unterhalb der Längsträger angeordnet ist. So lassen sich die Längsträger beispielsweise vor einem direkten Kontakt mit einem Hindernis schützen.

Der obere Rand und der untere Rand des Kopfrahmens können von einem einstückig ausgebildeten Kopfrahmenprofil des Kopfrahmens gebildet werden. Dies ist einfach zu realisieren und verleiht dem Kopfrahmen gleichzeitig eine hohe Stabilität und Steifigkeit. Weitere Bauteile, insbesondere Profile, können jedoch bei dem Kopfrahmen dennoch hinzukommen. Das Kopfrahmenprofil muss aber auch weder den oberen noch den unteren Rand bereitstellen. Bei dem Kopfrahmenprofil und anderen Profilen bieten sich aus Stabilitätsgründen und der Langlebigkeit halber ganz grundsätzlich solche an, die wenigstens im Wesentlichen aus Metall, insbesondere Stahl, gefertigt sind. Fertigungstechnisch bietet sich der Einfachheit halber ein Umformen des Kopfrahmenprofils durch Kanten und/oder Rollieren an. Das entsprechende Kopfrahmenprofil kann bevorzugt als zentrales Kopfrahmenprofil und damit als zentrales Bauteil ausgebildet sein.

Zur weiteren Aussteifung des Kofferaufbaus kann der Kopfrahmens beidseitig mit unter der Unterbodenlage angeordneten und mit der Unterbodenlage verbundenen Schrägträgern verbunden sein. So lassen sich auch Kräfte zweckmäßig schräg zum Rückwandrahmen in die übrige Bodenstruktur ableiten. Dies ist insbesondere dann vorteilhaft, wenn Rammpufferelemente des Kopfrahmens beidseitig mit unter der Unterbodenlage angeordneten und mit der Unterbodenlage verbundenen Schrägträgern verbunden sind. Die Rammpufferelemente nehmen bei einem Anfahren an ein Hindernis die Hauptkräfte auf und können diese mithin zuverlässig ableiten, ohne dass es zu einer Beschädigung des Kopfrahmens kommt. Dies gilt umso mehr, wenn die Schrägträger jeweils mit Längsträgern des Kofferaufbaus verbunden sind, die ihrerseits mit anderen Abschnitten des Kopfrahmens verbunden sein können. Alternativ oder zusätzlich können die Längsträger des Kofferaufbaus untereinander mit Querträgern des Kofferaufbaus verbunden sein.

Die Rammpufferelemente können stabil mit dem übrigen Kopfrahmen verbunden und im Falle einer Beschädigung auch leicht ausgetauscht werden, wenn wenigstens ein Rammpufferelement mit einem Trägerelement des Kopfrahmens, insbesondere mit dem Kopfrahmenprofil, verschraubt ist. Entsprechende Verschraubungen können dabei von hinten, von unten und/oder von der Seite gefügt sein, um eine sehr stabile Verbindung zwischen dem Trägerelement und dem Rammpufferelement bereitstellen zu können.

Alternativ oder zusätzlich ist es zur weiteren Vereinfachung des Kopfrahmens zweckmäßig, wenn wenigstens ein Schloss zum formschlüssigen Verriegeln einer Verriegelungsstange in einer geschlossenen Stellung einer Rückwandtür am Kopfrahmen, insbesondere am Kopfrahmenprofil, vorgesehen ist. Dies erlaubt eine entsprechende Integration der Verriegelung von Rückwandtüren in den Kopfrahmen, die bislang an einem separaten Teil des Rückwandrahmens vorgesehen wurden. So lässt sich eine höhere Integration bei weiterer Vereinfachung des Kofferaufbaus erreichen. Dies kann einhergehen, mit der Einsparung von Bauteilen und/oder von Material.

Zur weiteren Vereinfachung der Fertigung des Kofferaufbaus können die Holmstrukturen der Seitenwände an den Seitenwänden, die Holmstruktur des Dachs derart an dem Dach und/oder der Kopfrahmen an der Bodenstruktur vormontiert sein. Es ist dann keine separate Fertigung eines Rückwandrahmens und auch keine separate Montage eines solchen Rückwandrahmens erforderlich. Dabei ist es besonders einfach und daher zweckmäßig, wenn die entsprechenden Holmstrukturen derart vormontiert sind, so dass die Holmstrukturen beim Fügen der Seitenwände, des Dachs und der Bodenstruktur miteinander zwangsweise zum Rückwandrahmen verbunden werden. Die Vormontage erfordert so zwar zusätzliche Arbeitsschritte, allerdings lassen sich diese dann noch einfach vornehmen. Das Fügen der Seitenwände mit dem Dach und der Bodenstruktur ist dagegen aufgrund der Größe der entsprechenden Bauteile schon recht aufwändig, so dass es zu einer erheblichen Reduktion des Fertigungsaufwands beitragen kann, wenn der Rückwandrahmen dabei zwangsweise mit gefügt wird. Dies gilt auch dann, wenn die Holmstrukturen nach dem Fügen der Seitenwände mit dem Dach und der Bodenstruktur anschließend noch untereinander verschraubt werden müssen.

Bei einer ersten besonders bevorzugten Ausgestaltung des Nutzfahrzeugs ist der Kopfrahmen ausschließlich über die Bodenstruktur des Kofferaufbaus mit dem Chassis des Nutzfahrzeugs verbunden. Auf eine Verbindung des Kopfrahmens mit dem Chassis des Nutzfahrzeugs unterhalb der Bodenstruktur, wie sie bisher vorgenommen worden ist, wird mithin verzichtet. Dies spart zusätzlich Material ein und ist möglich, weil der Kopfrahmen die vom Kopfrahmen aufgenommenen Kräfte in die übrige Bodenstruktur ableitet. Eine direkte Verbindung des Kopfrahmens mit dem Chassis des Nutzfahrzeugs ist also verzichtbar.

Das Chassis weist zur stabilen Verbindung zwischen dem Chassis und dem Kofferaufbau vorzugsweise miteinander verbundene Chassislängsträger und Chassisquerträger auf. So wird eine sehr steife Leiterrahmenstruktur geschaffen. Auf dieser kann die Bodenstruktur des Kofferaufbaus der Einfachheit halber aufliegen. Dabei ist es nicht erforderlich, dass der Kofferaufbau auf den Chassislängsträgern und Chassiquerträgern aufliegt. Dies ist aus Stabilitätsgründen zwar bevorzugt, allerdings kann es auch ausreichen, wenn der Kofferaufbau nur auf den Chassislängsträgern oder nur auf den Chassisquerträgern aufliegt.

Wenn der Kofferaufbau unterhalb der Bodenstruktur und/oder der Unterbodenlage wenigstens einen Längsträger und/oder wenigstens einen Schrägträger aufweist, ist es nicht erforderlich, dass der Längsträger und/oder Schrägträger direkt mit dem Chassis des Nutzfahrzeuges verbunden ist. Um Material einzusparen, bietet es sich vielmehr an, wenn der Längsträger und/oder Schrägträger des Kofferaufbaus lediglich indirekt mit dem Chassis verbunden ist. Dies ist in besonderem Maße der Fall, wenn der Längsträger und/oder Schrägträger des Kofferaufbaus ausschließlich über die Bodenstruktur des Kofferaufbaus mit dem Chassis des Nutzfahrzeugs verbunden ist.

Nachfolgend wir die Erfindung anhand einer lediglich ein Ausführungsbeispiel darstellenden Zeichnung erläutert. In der Zeichnung zeigt
- Fig. 1: ein von einer Zugmaschine gezogenes Nutzfahrzeug mit einem erfindungsgemäßen Kofferaufbau in einer perspektivischen Darstellung,
- Fig. 2: eine Draufsicht auf die Rückwand des Kofferaufbaus aus Fig. 1,
- Fig. 3: ein Detail der Verbindung zwischen Dach und Seitenwand des Kofferaufbaus aus Fig. 1 in einer Schnittansicht,
- Fig. 4: ein Detail der Verbindung zwischen Bodenstruktur und Seitenwand des Kofferaufbaus aus Fig. 1 in einer teilweisen Schnittansicht,
- Fig. 5: das hintere Ende des Kofferaufbaus aus Fig. 1 in einer Schnittansicht entlang einer Schnittebene parallel zur Längserstreckung des Kofferaufbaus und
- Fig. 6A-B: das hintere Ende des Kofferaufbaus aus Fig. 1 und ein Detail des hinteren Endes des Kofferaufbaus aus Fig. 1 in einer Ansicht von unten.

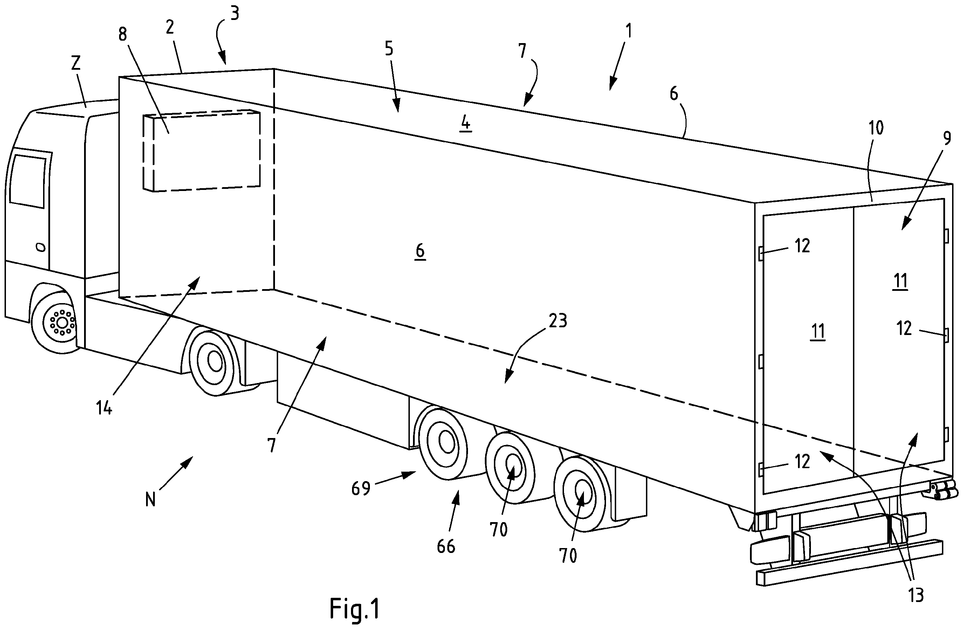

In der Fig. 1 ist ein von einem Nutzfahrzeug N in Form eines Sattelaufliegers getragener und von einer Zugmaschine Z gezogener Kofferaufbau 1 in Form eines Kühlkofferaufbaus dargestellt. Der Kofferaufbau 1 umfasst eine Stirnwand 2 aus einem Stirnwandpaneel 3, ein Dach 4 aus einem Dachpaneel 5 und Seitenwände 6 aus jeweils einem Seitenwandpaneel 7. An der Stirnwand 2 ist eine Transportkältemaschine 8 zum Kühlen des Kofferaufbaus 1 mittels Kühlluft vorgesehen. An der Rückseite des Kühlkofferaufbaus 1 ist eine Rückwand 9 mit einem Rückwandrahmen 10 vorgesehen, in dem zwei Rückwandtüren 11 über Scharniere 12 schwenkbar gehalten sind, die ebenfalls durch ein Türpaneel 13 gebildet werden. Die Rückwandtüren 11 können aus einer in dem Rückwandrahmen 10 vorgesehenen, einen Laderaum 14 des Kofferaufbaus 1 verschließenden geschlossenen Stellung in eine den Laderaum 14 für das Be- und Entladen durch den Rückwandrahmen 10 freigebende geöffnete Stellung und zurück verstellt werden.

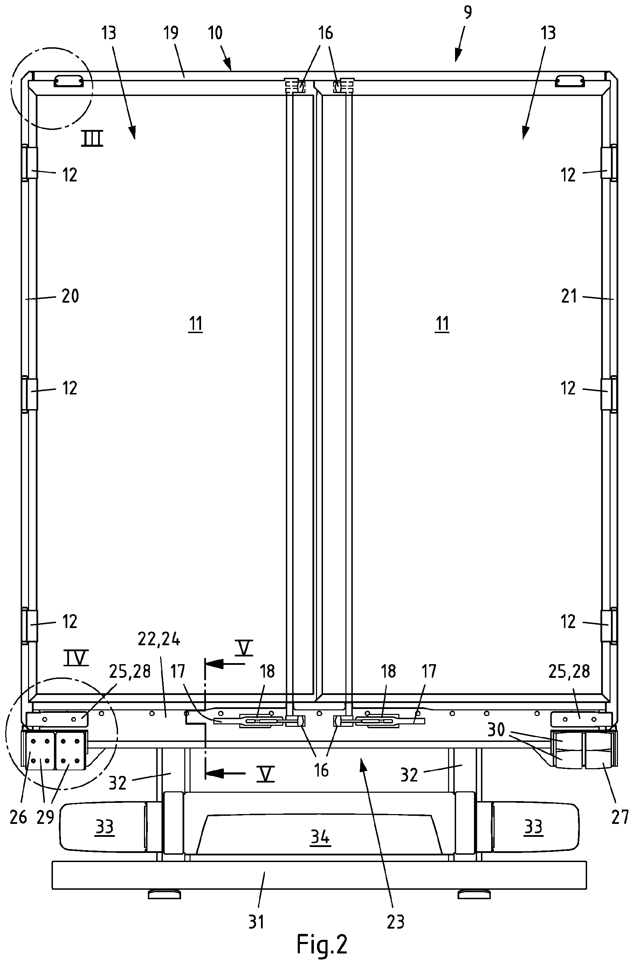

Wie insbesondere in der Fig. 2 dargestellt ist, weisen die Rückwandtüren 11 jeweils eine Verriegelungsstange 15 auf, mit der die entsprechende Rückwandtür 11 formschlüssig an korrespondierenden Schlössern 16 am oberen Rand und am unteren Rand des Rückwandrahmens 10 gehalten werden kann. Die Verriegelungsstangen 15 werden händisch mittels Handgriffen 17 bedient, die bei verriegelten Rückwandtüren 11 an Griffhalterungen 18 gehalten und/oder festgelegt werden. Die Rückwandtüren 11 können so in der geschlossenen Stellung verriegelt und gegenüber einem versehentlichen und/oder unbefugten Öffnen gesichert werden. Auch wenn in der Fig. 2 jeder Rückwandtür 11 eine einzige Verriegelungsstange 15 zugeordnet ist, könnten grundsätzlich auch mehrere Verriegelungsstangen 15 einer Rückwandtür 11 zugeordnet sein. Dies ist jedoch mit einem zusätzlichen konstruktiven Aufwand verbunden.

Der Rückwandrahmen 10 des Kofferaufbaus 1 ist mehrteilig aus vier verschiedenen separaten Holmstrukturen 19-22 gebildet. Dabei stellt das Dach 4 eine Bodenstruktur 23 und jede Seitenwand 6 eine Holmstruktur 19-22 bereit. Die Holmstruktur 22 der Bodenstruktur 23 wird durch einen Kopfrahmen 24 gebildet. Zudem sind die Holmstrukturen 24 so an dem Dach 4, den Seitenwänden 6 und der Bodenstruktur 23 vormontiert, dass beim Zusammenfügen von den Seitenwänden 6, dem Dach 4 und der Bodenstruktur 23 zu einem Kofferaufbau 1 die Holmstrukturen 19-22 zwangsweise zu einem Rückwandrahmen 10 zusammengesetzt werden. Die einzelnen Holmstrukturen 29-22 müssen dann nur noch fest miteinander verbunden werden. Da sich die Holmstrukturen 19-22 über wenigstens im Wesentlichen die gesamte Höhe der Seitenwandpaneele 7 oder über wenigstens im Wesentlichen die gesamte Breite des Dachpaneels 5 oder der Bodenstruktur 23 erstrecken, wird durch das Fügen von Seitenwänden 6, Dach 4 und Bodenstruktur 23 ein umlaufend geschlossener Rückwandrahmen 10 gebildet, der als solches nicht separat und nachträglich montiert werden muss.

Der Kopfrahmen 24 des Kofferaufbaus 1 trägt an seinen äußeren Enden unterschiedliche Rammpuffer 25-27. Die oberen Rammpuffer 25 sind Gummipuffer die durch Gummiblöcke 28 gebildet werden, die mit dem übrigen Kopfrahmen 24 verschraubt sind. Darunter sind jeweils weitere Rammpuffer 26,27 vorgesehen, wobei bei dem dargestellten Kofferaufbau 1 links und rechts der besseren Anschaulichkeit halber unterschiedliche Rammpuffer 26,27 dargestellt sind. Bevorzugt wird es in der Praxis jedoch sein, wenn es sich dabei um gleichartige Rammpuffer 26,27 handelt. Links ist ein Kunststoffpuffer dargestellt, der zwei Kunststoffblöcke 29 umfasst.

Rechts ist ein sogenannter Rollrammpuffer 27 dargestellt, der zwei Rollen 30 trägt, die an einem Hindernis wie einer Laderampe abrollen können, wenn der Kofferaufbau 1 beladen oder entladen wird.

Unterhalb des Kopfrahmens 24 ist ein Unterfahrschutz 31 montiert, der ein Unterfahren des Kofferaufbaus 1 durch ein Fahrzeug wie einen Personenkraftwagen verhindern soll. Der Unterfahrschutz 31 erstreckt sich annähernd über die Breite des Kofferaufbaus 1 und wird von Stützprofilen 32 gehalten. Die Stützprofile 32 halten zusätzlich noch an gegenüberliegenden Seiten Leuchtenträger 33, umfassend die Rückleuchten und Blinker sowie bedarfsweise Rückfahrscheinwerfer. Zwischen den Stützprofilen 32 ist noch ein Kennzeichenträger 34 vorgesehen, an dem das amtliche Kennzeichen befestigt werden kann.

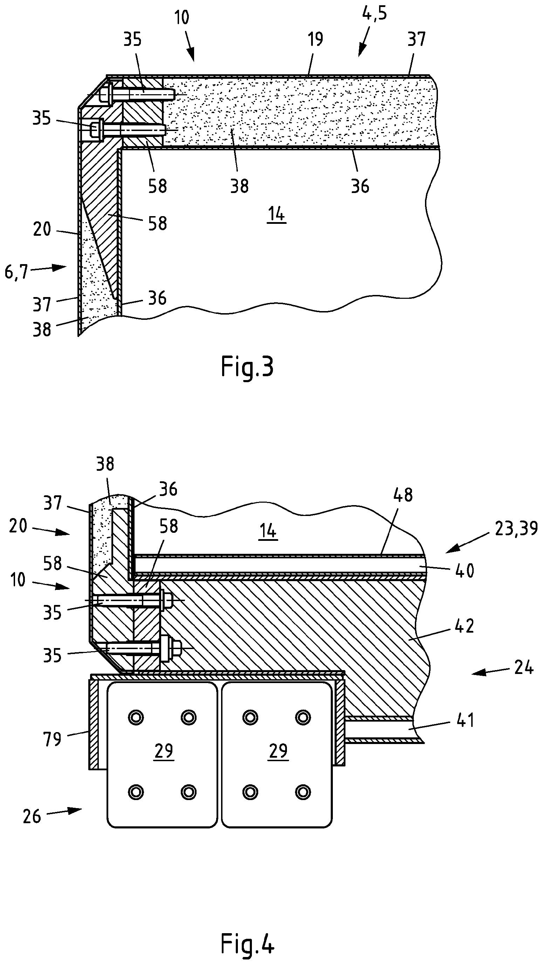

In der Fig. 3 ist ein Detail des Rückwandrahmens 10 im Bereich der Verbindung zwischen dem Dach 4 und einer Seitenwand 6 dargestellt. Die Holmstruktur 19 des Dachs 4 und die Holmstruktur 20 der Seitenwand 6 sind in dem gemeinsamen Eckbereich über Schrauben 35 miteinander verschraubt, die in Verbindungselemente 58 von Dach 4 und Seitenwand eingreifen. Die Verbindung zwischen der Holmstruktur 19 des Dachs 4 und der Holmstruktur 21 der anderen Seitenwand 6 ist analog ausgebildet.

Die Seitenwandpaneele 7 der Seitenwände 6 und das Dachpaneel 5 des Dachs 4 weisen jeweils zum Laderaum 14 weisende strukturgebende innere Decklagen 36 und zur Umgebung des Kofferaufbaus 1 weisende strukturgebende äußere Decklagen 37 auf, zwischen denen eine Kernlage 38 aus einem geschäumten und/oder extrudierten Kunststoff vorgesehen ist.

In der Fig. 4 ist ein Detail des Rückwandrahmens 10 im Bereich der Verbindung zwischen der Bodenstruktur 23 und einer Seitenwand 6 dargestellt. Der Kopfrahmen 24 der Bodenstruktur 23 und die Holmstruktur 20 der Seitenwand 6 sind in dem gemeinsamen Eckbereich über Schrauben 35, die in Verbindungselemente 58 von Seitenwand 6 und Bodenstruktur 23 eingreifen, miteinander verschraubt. Die Verbindung zwischen dem Kopfrahmen 24 und der Holmstruktur 21 der anderen Seitenwand 6 ist analog ausgebildet.

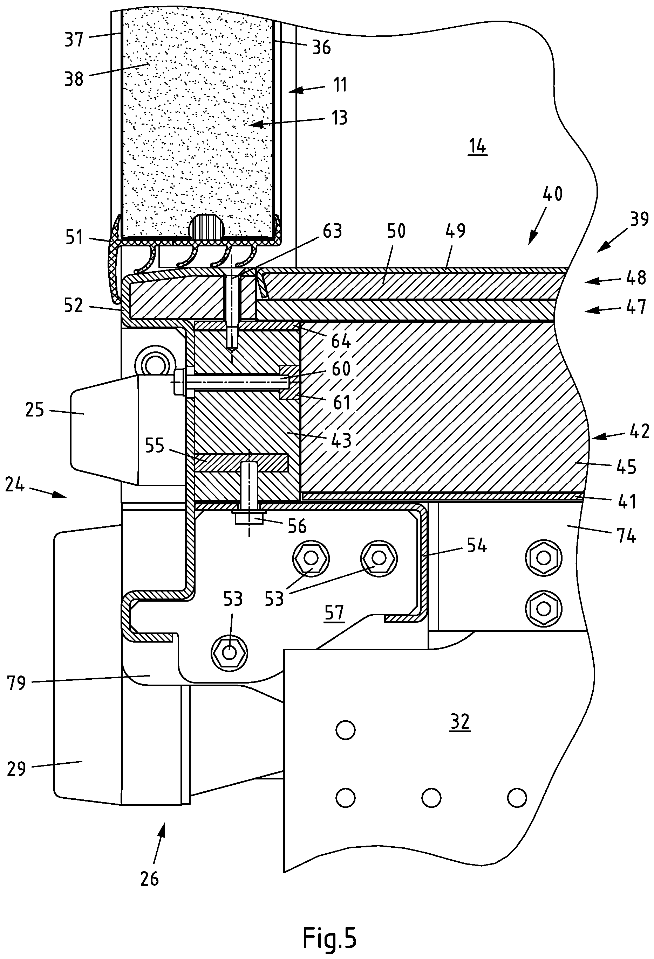

In der Fig. 5 in das hintere Ende des Nutzfahrzeugs N in einem Längsschnitt dargestellt. Die den Rückwandrahmen 10 verschließenden Türpaneele 13 weisen jeweils strukturgebende innere Decklagen 36, die zum Laderaum 14 hinweisen und strukturgebende äußere Decklagen 37, die von dem Laderaum 14 wegweisen auf. Zwischen den inneren Decklagen 36 und den äußeren Decklagen 37, die jeweils mehrlagig ausgebildet sein und eine Schicht aus einem Metall oder einem faserverstärkten Kunststoff aufweisen können, ist eine Kernlage 38 aus einem geschäumten und/oder extrudierten Kunststoff vorgesehen.

Das Bodenpaneel 39 der Bodenstruktur 23 wird dagegen durch eine Oberbodenlage 40 und eine Unterbodenlage 41 gebildet, die über eine Bodenlage 42 voneinander beabstandet sind. Die Bodenlage 42 wird dabei wenigstens im Wesentlichen aus einer Mehrzahl von Bodenquerträgern 43 und einem jeweils dazwischen vorgesehenen geschäumten und/oder extrudierten Kunststoff 45 gebildet. Bei dem Kunststoff 45 kann es sich bedarfsweise um eine Mischung aus Kunststoffen oder unterschiedlichen, miteinander verbundenen Kunststoffen handeln. Die Bodenquerträger 43 sind aus Holz gebildet. Bei der Unterbodenlage 41 handelt es sich bei dem dargestellten und insoweit bevorzugten Kofferaufbau 1 um eine Blechlage aus Stahl. Die Oberbodenlage 40 ist bei dem dargestellten und insoweit bevorzugten Kofferaufbau 1 mehrlagig ausgebildet. Es sind eine Traglage 47 aus Holz und ein mit der Traglage 47 verklebter Ladeboden 48 vorgesehen, wobei der Ladeboden 48 wiederum zweilagig ausgebildet ist. Die Oberseite des Ladebodens 48, auf dem die Ladung abgestellt werden kann, ist aus einer Metalllage 49 gebildet, die aus Aluminium gefertigt sein kann, welche fest mit einer Stützlage 50 aus Holz verbunden ist.

Zwischen der Bodenstruktur 23 und der Rückwandtür 11 in der geschlossenen Stellung ist ein Dichtungselement 51 vorgesehen, das einen konvektiven Wärmetransport an den Rückwandtüren 11 vorbei in den Laderaum 14 hinein vermeidet. Gegenüber den Rückwandtüren 11 stehen die Rammpufferelemente 25-27 des Kopfrahmens 24 nach hinten in Richtung eines möglichen Hindernisses vor. Die oberen Rammpufferelemente 25 sind an einem Kopfrahmenprofil 52 des Kopfrahmens 24 verschraubt. Zudem ist noch das äußere und untere Rammpufferelement 26 von der Seite mit dem Kopfrahmenprofil 52 über Schrauben 53 verschraubt.

Der Kopfrahmen 24 ist bei dem dargestellten und insoweit bevorzugten Kofferaufbau 1 mehrteilig ausgebildet. Zentral ist ein Kopfrahmenprofil 52 vorgesehen, an dem die oberen Rammpufferelemente 25, die Schlösser 16 und die Griffhalterungen 18 festgelegt sind. Festgelegt an dem zentralen Kopfrahmenprofil 52 ist ein weiteres Abschlussprofil 54 vorgesehen, das sich von dem zentralen Kopfrahmenprofil 52 nach vorne in Richtung Stirnwand 2 und unterhalb der Bodenstruktur 23 erstreckt. Das Abschlussprofil 54 ist von unten mit dem hintersten Bodenquerträger 43 verschraubt. Dazu wird in den hintersten Bodenquerträger 43 eine Zugankerplatte 55 aus Stahl eingebracht, in der ein Gewinde zum Einschrauben der entsprechenden Schrauben 56 bereitgehalten wird. Über die Zugankerplatte 55 wird das Abschlussprofil 54 nach oben gegen die Bodenstruktur 23 wie beispielsweise die Unterbodenlage 41 gezogen. Die Verwendung einer solchen Zugankerplatte 55 ist jedoch optional. In dem Abschlussprofil 54 sind in regelmäßigen Abständen Längsplatten 57 zum Aussteifen des Kopfrahmens 24 vorgesehen, wobei die äußeren Längsplatten 57 über entsprechende Schrauben 53 mit den unteren Rammpufferelementen 26-27 an den gegenüberliegenden seitlichen Enden des Kopfrahmens 24 verschraubt sind. Der Kopfrahmen 24 kann bedarfsweise noch weitere Profile aufweisen.

Das zentrale Kopfrahmenprofil 52 wird über entsprechende Schrauben 60 mit dem hintersten Bodenquerträger 43 verschraubt, die bei dem dargestellten und insoweit bevorzugten Kofferaufbau 1 in wenigstens ein Konterelement 61, in dem entsprechende Gewinde vorgesehen sind, eingreifen. Infolge des Konterelements 61 wird das zentrale Kopfrahmenprofil 52 nach vorne gegen den hintersten Bodenquerträger 43 gezogen. Das zentrale Kopfrahmenprofil 52 ist ferner über Schrauben 63 von oben mit dem hintersten Bodenquerträger 43 verschraubt ist. Die Schrauben 63 greifen bei dem dargestellten und insoweit bevorzugten Kofferaufbau 1 in ein Konterelement 64 aus Stahl ein, in dem entsprechende Gewinde vorgesehen sind. Das zentrale Kopfrahmenprofil 52 und das Abschlussprofil 54 erstrecken sichnd jeweils wenigstens im Wesentlichen über die gesamte Breite der Bodenstruktur 23. Durch die Verschraubung des Kopfrahmens 24 mit dem hinteren Bodenquerträger 43 von oben, von unten und von hinten ist der Kopfrahmen 24 sehr fest und stabil mit dem übrigen Teil der Bodenstruktur 23 verbunden. Der obere Rand des Kopfrahmens 24 ist dabei wenigstens im Wesentlichen auf der Höhe der Oberbodenlage 40 angeordnet und etwa fluchtend mit dem Ladeboden 48 ausgerichtet.

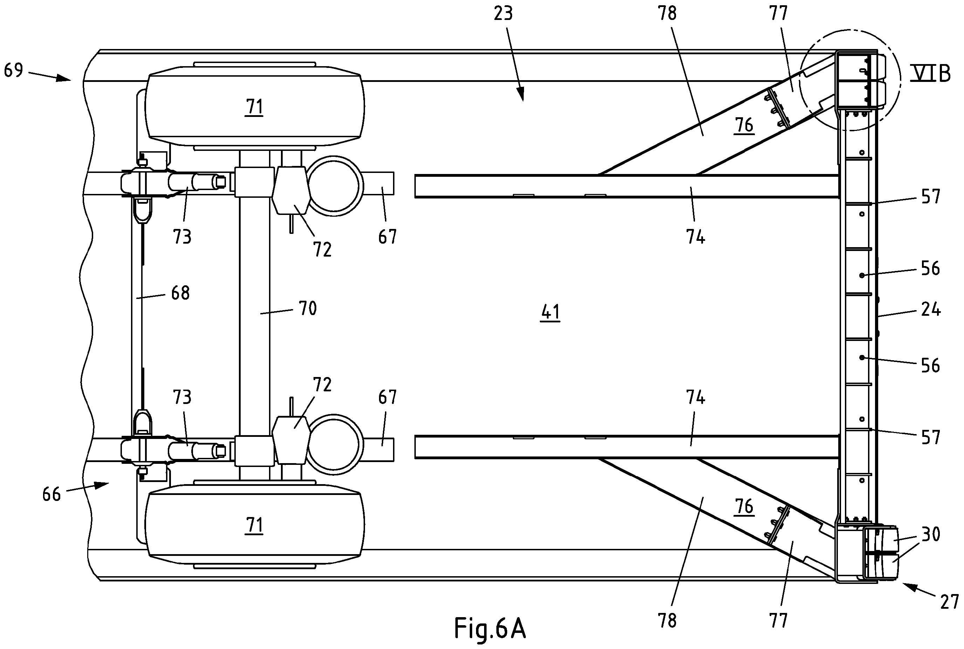

In der Fig. 6A ist der hintere Teil des Nutzfahrzeugs N von unten dargestellt. Auf der linken Seite ist das Chassis 66 des Nutzfahrzeugs N dargestellt, das aus Chassislängsträgern 67 und Chassisquerträgern 68 gebildet wird, die zusammen eine Leiterstruktur bilden. An dem Chassis 66 ist ein Fahrwerk 69 umfassend mehrere Achsen 70 festgelegt. Das Fahrwerk 69 umfasst neben den Achsen 70 die zugehörigen Räder 71, Bremsen 72 und Federeinrichtungen 73, wie dies grundsätzlich aus dem Stand der Technik bekannt ist. Der Kofferaufbau 1 ist von oben auf das Chassis 66 aufgesetzt und mit dem Chassis 66 verschraubt. Das Chassis 66 endet kurz hinter der hinteren Achse 70 des Nutzfahrzeugs N. Mit einem gewissen Abstand zu dem Chassis 66 des Nutzfahrzeugs N sind unter der Bodenstruktur 23 Längsträger 74 des Kofferaufbaus 1 vorgesehen, die mit der Bodenstruktur 23 des Kofferaufbaus 1 verschraubt sind. Die Längsträger 74 des Kofferaufbaus 1 sind ausschließlich über die Bodenstruktur 23 des Kofferaufbaus 1, aber nicht direkt mit dem Chassis 66 des Nutzfahrzeugs N verbunden.

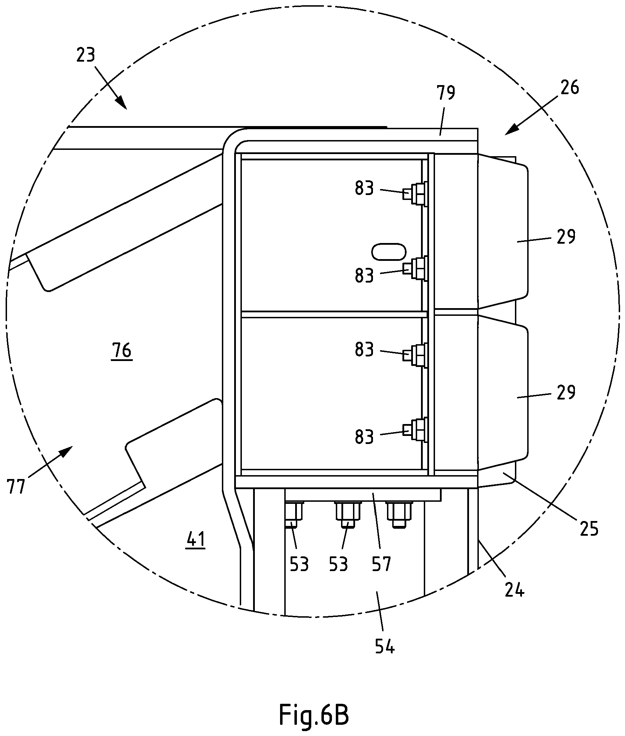

Die hinteren Enden der Längsträger 74 des Kofferaufbaus 1 sind mit dem Kopfrahmen 24 verbunden. Bei dem dargestellten und insoweit bevorzugten Kofferaufbau 1 sind die Längsträger 74 mit dem Kopfrahmen 24 verschraubt. Zudem sind auf den Außenseiten der Längsträger 74 zwei Schrägträger 76 vorgesehen, die jeweils mit dem zugeordneten Längsträger 74 des Kofferaufbaus 1 verbunden, insbesondere verschraubt sind. An den hinteren Enden der Schrägträger 76 sind die Schrägträger 76 mit den seitlich am Kopfrahmen 24 vorgesehenen, unteren Rammpufferelementen 26,27 verbunden. Diese Rammpufferelemente 26,27 können also Kräfte direkt an die Schrägträger 76 ableiten und über die Schrägträger 76 dann an die Längsträger 74. Die Rammpufferelemente 26,27 sind dabei seitlich mit dem übrigen Kopfrahmen 24 verschraubt und mit hinteren Abschnitten des Schrägträgers 76 verschweißt, wie dies insbesondere in der Fig. 6B dargestellt ist. Der hintere Abschnitt 77 des Schrägträgers 76 ist dabei mit dem vorderen Abschnitt 78 des Schrägträgers 76 verschraubt. Ebenso sind die Kunststoffblöcke 29 des Rammpufferelements 26 über Schrauben 84 mit dem Rammpuffergehäuse 79 verschraubt.

Bei dem dargestellten Kopfrahmen 24 sind der besseren Anschaulichkeit halber an den gegenüberliegenden Seiten des Kopfrahmens 24 unterschiedliche Rammpufferelemente 26,27 vorgesehen. Bevorzugt wird es jedoch regelmäßig sein, wenn dieselben Rammpufferelemente 26,27 an den gegenüberliegenden Seiten verbaut sind. Das an der linken Seite des Kofferaufbaus 1 vorgesehene und in der Fig. 6B im Detail dargestellte Rammpufferelement 26 weist zwei Kunststofflöcke 29 auf, die mit dem Rammpuffergehäuse 79 verschraubt sind, so dass sich die Kunststoffblöcke 29 bedarfsweise leicht austauschen lassen.

### Bezugszeichenliste

- 1: Kofferaufbau
- 2: Stirnwand
- 3: Stirnwandpaneel
- 4: Dach
- 5: Dachpaneel
- 6: Seitenwand
- 7: Seitenwandpaneel
- 8: Transportkältemaschine
- 9: Rückwand
- 10: Rückwandrahmen
- 11: Rückwandtür
- 12: Scharnier
- 13: Türpaneel
- 14: Laderaum
- 15: Verriegelungsstange
- 16: Schloss
- 17: Handgriff
- 18: Griffhalterung
- 19-22: Holmstruktur
- 23: Bodenstruktur
- 24: Kopfrahmen
- 25-27: Rammpufferelement
- 28: Gummiblock
- 29: Kunststoffblock
- 30: Rolle
- 31: Unterfahrschutz
- 32: Stützprofil
- 33: Leuchtenträger
- 34: Kennzeichenträger
- 35: Schraube
- 36: innere Decklagen
- 37: äußere Decklagen
- 38: Kernlage
- 39: Bodenpaneel
- 40: Oberbodenlage
- 41: Unterbodenlage
- 42: Bodenlage
- 43: Bodenquerträger
- 45: Kunststoff
- 47: Traglage
- 48: Ladeboden
- 49: Metalllage
- 50: Stützlage
- 51: Dichtungselement
- 52: Kopfrahmenprofil
- 53: Schrauben
- 54: Abschlussprofil
- 55: Zugankerplatte
- 56: Schrauben
- 57: Längsplatte
- 58: Verbidnungselement
- 60: Schrauben
- 61: Konterelement
- 63: Schrauben
- 64: Konterelement
- 66: Chassis
- 67: Chassislängsträger
- 68: Chassisquerträger
- 69: Fahrwerk
- 70: Achse
- 71: Räder
- 72: Bremsen
- 73: Federeinrichtung
- 74: Längsträger
- 75: Schraube
- 76: Schrägträger
- 77: hinterer Abschnitt
- 78: vorderer Abschnitt
- 79: Rammpuffergehäuse
- N: Nutzfahrzeug
- Z: Zugmaschine

## Patentansprüche

1. Kofferaufbau (1) eines Nutzfahrzeugs (N), insbesondere Lastkraftwagen, Anhänger oder Sattelauflieger, mit festen, jeweils ein Seitenwandpaneel (7) umfassenden Seitenwänden (6), einem festen ein Dachpaneel (5) umfassenden Dach (4) und einer festen Bodenstruktur (23), wobei die Seitenwandpaneele (7) und das Dachpaneel (5) eine strukturgebende, einem Laderaum (11) des Kühlkofferaufbaus (1) zugeordnete innere Decklage (36), eine strukturgebende, der Umgebung des Kühlkofferaufbaus (1) zugeordnete äußere Decklage (37) und eine zwischen der inneren Decklage (36) und der äußeren Decklage (37) angeordnete Kernlage (38) aus einem Kunststoff aufweisen, wobei die Bodenstruktur (23) ein Bodenpaneel (39) umfassend eine einen Ladeboden (48) bereitstellende Oberbodenlage (40), eine Unterbodenlage (41) zum Aufsetzen auf ein Chassis (66) oder Fahrwerk (69) des Nutzfahrzeugs (N) und eine zwischen der Oberbodenlage (40) und der Unterbodenlage (41) vorgesehene Bodenlage (42) aufweist, wobei die Bodenlage (42) eine Mehrzahl von Bodenquerträgern (43) und einen zwischen den Bodenquerträgern (43) vorgesehenen Kunststoff umfasst, wobei die Bodenstruktur (23), die Seitenwände (6) und das Dach (4) jeweils separate und untereinander zur Bildung eines Rückwandrahmens (10) gefügte Holmstrukturen (19-22) aufweisen und wobei sich die Holmstrukturen (20,21) der Seitenwände (6) wenigstens im Wesentlichen über die gesamte Höhe der Seitenwandpaneele (7) und die Holmstruktur (19) des Dachs (4) wenigstens im Wesentlichen über die gesamte Breite des Dachpaneels (5) erstrecken,
**dadurch gekennzeichnet, dass** die Holmstruktur (22) der Bodenstruktur (23) als ein mit der Bodenstruktur (23) verschraubter, sich wenigstens im Wesentlichen über die gesamte Breite der Bodenstruktur (23) erstreckender und wenigstens ein Rammpufferelement (25-27) tragender Kopfrahmen (24) ausgebildet ist.

2. Kofferaufbau nach Anspruch 1,
**dadurch gekennzeichnet, dass** das wenigstens eine Rammpufferelement (25-27) ein Gummipuffer, ein Kunststoffpuffer und/oder ein Rollrammpuffer, insbesondere mit wenigstens einer elastisch gelagerten Rolle (30), ist.

3. Kofferaufbau nach Anspruch 1 oder 2,
**dadurch gekennzeichnet, dass** die Holmstrukturen (20,21) der Seitenwände (6) mit der Holmstruktur (19) des Dachs (4) und/oder mit dem Kopfrahmen (24) verschraubt sind.

4. Kofferaufbau nach Anspruch 3,
**dadurch gekennzeichnet, dass** der Kopfrahmen (24) mit dem hintersten Bodenquerträger (43) der Bodenstruktur (23) verschraubt ist und dass, vorzugsweise, der Kopfrahmen (24) mit der Oberbodenlage (40) und/oder mit der Unterbodenlage (41) verschraubt ist.

5. Kofferaufbau nach Anspruch 3 oder 4,
**dadurch gekennzeichnet, dass** der Kopfrahmen (24), vorzugsweise mit Schrauben (53,56,58) von oben, hinten und/oder von unten bezogen auf den Kofferaufbau (1), mit der Bodenstruktur (23), insbesondere dem hintersten Bodenquerträger (43), verschraubt ist.

6. Kofferaufbau nach einem der Ansprüche 1 bis 5,
**dadurch gekennzeichnet, dass** der obere Rand des Kopfrahmens (24) wenigstens im Wesentlichen auf der Höhe der Oberbodenlage (40) angeordnet ist und dass, vorzugsweise, der obere Rand des Kopfrahmens (24) wenigstens im Wesentlichen fluchtend mit dem Ladeboden (48) ausgerichtet ist.

7. Kofferaufbau nach einem der Ansprüche 1 bis 6,
**dadurch gekennzeichnet, dass** der untere Rand des Kopfrahmens (24) wenigstens im Wesentlichen unterhalb der Unterbodenlage (41) angeordnet ist und dass, vorzugsweise, der untere Rand des Kopfrahmens (24) auf Höhe des unteren Endes von unter der Unterbodenlage (41) angeordneten und mit der Unterbodenlage (41) verbundenen Längsträgern (74) oder unterhalb der Längsträger (74) angeordnet ist.

8. Aufbau nach Anspruch 6 oder 7,
**dadurch gekennzeichnet, dass** der obere Rand und der untere Rand des Kopfrahmens (24) von einem einstückig ausgebildeten Kopfrahmenprofil (52) des Kopfrahmens gebildet wird und dass, vorzugsweise, das Kopfrahmenprofil (52) aus Metall, insbesondere durch Kanten und/oder Rollieren, gebildet ist.

9. Kofferaufbau nach einem der Ansprüche 1 bis 8,
**dadurch gekennzeichnet, dass** der Kopfrahmen (24), vorzugsweise Rammpufferelemente (26-27) des Kopfrahmens (24), beidseitig mit unter der Unterbodenlage (41) angeordneten und mit der Unterbodenlage (41) verbundenen Schrägträgern (76) verbunden sind und dass, vorzugsweise, die Längsträger (74) jeweils mit einem Schrägträger (76) verbunden sind.

10. Kofferaufbau nach einem der Ansprüche 1 bis 9,
**dadurch gekennzeichnet, dass** wenigstens ein Rammpufferelement (25-27) mit dem Kopfrahmen (24), insbesondere mit dem Kopfrahmenprofil (52), von hinten, von unten und/oder von der Seite verschraubt ist und/oder dass wenigstens ein Schloss (16) zum formschlüssigen Verriegeln einer Verriegelungsstange (15) in einer geschlossenen Stellung einer Rückwandtür (11) am Kopfrahmen (24), insbesondere am Kopfrahmenprofil (52), vorgesehen ist.

11. Kofferaufbau nach einem der Ansprüche 1 bis 10,
**dadurch gekennzeichnet, dass** die Holmstrukturen (20,21) der Seitenwände (6) an den Seitenwänden (6), die Holmstruktur (19) des Dachs (4) an dem Dach (4) und/oder der Kopfrahmen (24) an der Bodenstruktur (23) derart vormontiert sind und dass, vorzugsweise, die Holmstrukturen (19-22) derart vormontiert sind, so dass die Holmstrukturen (19-22) beim Fügen der Seitenwände (6), des Dachs (4) und der Bodenstruktur (23) miteinander zwangsweise zum Rückwandrahmen (10) verbunden werden.

12. Nutzfahrzeug (1), insbesondere Lastkraftwagen, Anhänger oder Sattelauflieger, mit einem Chassis (66), einem am Chassis (66) montierten Fahrwerk (69) und einem vom Chassis (66) getragenen, am Chassis (66) montierten Kofferaufbau (1),
**dadurch gekennzeichnet, dass** der Kofferaufbau (1) nach einem der Ansprüche 1 bis 11 ausgebildet ist.

13. Nutzfahrzeug nach Anspruch 12,
**dadurch gekennzeichnet, dass** der Kopfrahmen (24) ausschließlich über die Bodenstruktur (23) des Kofferaufbaus (1) mit dem Chassis (66) verbunden ist.

14. Nutzfahrzeug nach Anspruch 12 oder 13,
**dadurch gekennzeichnet, dass** das Chassis (66) miteinander verbundene Chassislängsträger (67) und Chassisquerträger (68) umfasst und dass, vorzugsweise, die Bodenstruktur (23) des Kofferaufbaus (1) auf den Chassislängsträgern (67) und/oder Chassisquerträger (68) aufliegt.

15. Nutzfahrzeug nach einem der Ansprüche 12 bis 14,
**dadurch gekennzeichnet, dass** der Kofferaufbau (1) nach einem der Ansprüche 7 oder 9 ausgebildet ist und dass die Längsträger (74) und/oder Schrägträger (76) des Kofferaufbaus (1) indirekt, insbesondere ausschließlich über die Bodenstruktur (23) des Kofferaufbaus (1), mit dem Chassis (66) verbunden sind.
